Europäisches Patentamt

(19) European Patent Office

Office européen des brevets

(11) Veröffentlichungsnummer : **0 110 203**
**B1**

# (12) EUROPÄISCHE PATENTSCHRIFT

(45) Veröffentlichungstag der Patentschrift :
04.03.87

(21) Anmeldenummer : 83111126.5

(22) Anmeldetag : 08.11.83

(51) Int. Cl.⁴ : **B 60 T   8/22**

(54) Einstellmechanismus für lastabhängig angesteuerte Bremskraftregler, insbesondere für Motor- und Anhängerfahrzeuge.

(30) Priorität : 25.11.82 DE 3243654

(43) Veröffentlichungstag der Anmeldung :
13.06.84 Patentblatt 84/24

(45) Bekanntmachung des Hinweises auf die Patenterteilung : 04.03.87 Patentblatt 87/10

(84) Benannte Vertragsstaaten :
**AT BE DE FR GB IT NL SE**

(56) Entgegenhaltungen :
**EP-A- 0 051 137**
**DE-A- 2 809 998**
**DE-A- 2 855 295**

(73) Patentinhaber : **KNORR-BREMSE AG**
**Moosacher Strasse 80 Postfach 401060**
**D-8000 München 40 (DE)**

(72) Erfinder : **Haas, Anton**
**Adelmannstrasse 15**
**D-8000 München 82 (DE)**

EP 0 110 203 B1

## Beschreibung

Die Erfindung betrifft einen Einstellmechanismus nach dem Gattungsbegriff des Patentanspruches 1.

Bei einem bekannten Bremskraftregler (DE-OS 28 55 295) ist eine Verstelleinrichtung vorgesehen, bei welcher eine Steuerwelle relativ zu einer Kurvenscheibe verdreht wird. Hierbei ist nur ein bestimmter Punkt der Bremscharakteristik des Bremskraftreglers optimierbar ; bei gewissen Winkelstellungen machen sich außerdem die Fertigungstoleranzen des Gerätes bemerkbar. Dies führt zu einer Streuung der Kennlinie von einem Gerät zum anderen und deshalb zu einem unterschiedlichen Bremsverhalten von gleichen Fahrzeugtypen. Es besteht hierbei die Problematik, innerhalb der vorgeschriebenen « Toleranzbänder » zu bleiben.

Davon ausgehend besteht die Aufgabe der Erfindung darin, einen Einstellmechanismus der in Rede stehenden Art so auszubilden, daß mit einfachen Mittel eine exakte Einstellung des Bremskraftreglers ermöglicht wird, derart, daß Fertigungstoleranzen weitgehend ausgeschaltet werden. Hierdurch soll eine vorzugsweise minimale Steuerung von Gerät zu Gerät erzielbar sein.

Zur Lösung dieser Aufgabe dienen die Merkmale nach dem Patentanspruch 1.

Der erfindungsgemäße Einstellmechanismus, welcher sowohl für mechanische als auch für pneumatisch angesteuerte Bremskraftregler verwendbar ist, bietet den großen Vorteil, daß unterschiedliche Fertigungstoleranzen von Gerät zu Gerät mittels Feineinstellung berücksichtigt, d. h. korrigiert werden können. Da das lastabhängig mechanisch oder pneumatisch beeinflußte Kurvenelement des Bremskraftreglers sowohl radial als auch in Umfangsrichtung exakt eingestellt werden kann, ist es zumindest möglich, zwei Punkte der Bremskraftregler-Kennlinie exakt einzustellen, z. B. die Leerlaststellung und die Vollaststellung. Die Einstellung ist ohne aufwendige Maßnahmen durchführbar, da die zur Einstellung der Kurvenscheibe, bzw. des Kurvenkörpers vorgesehenen Schrauben oder dergleichen Einstelleelemente leicht zugängig sind.

Vorteilhafte Ausgestaltungen und Weiterbildungen sind in abhängigen Patentansprüchen aufgeführt.

Die Erfindung ist nachfolgend anhand von Ausführungsbeispielen unter Bezugnahme auf die beigefügte Zeichnung erläutert.

Figur 1 ist eine Teilschnittansicht eines mechanisch angesteuerten Bremskraft-reglers mit dem Einstellmechanismus nach der Erfindung ;

Figur 2 ist eine Schnittansicht von Linie II-II in Fig. 1 ;

Figur 3 ist eine geschnittene Einzelansicht der lastabhängig pneumatisch angesteuerten Vorrichtung eines Bremskraftreglers unter Verwendung des erfindungsgemäßen Einstellmechanismus ; und

Figur. 4 ist eine Schnittansicht von Linie IV-IV in Fig. 3.

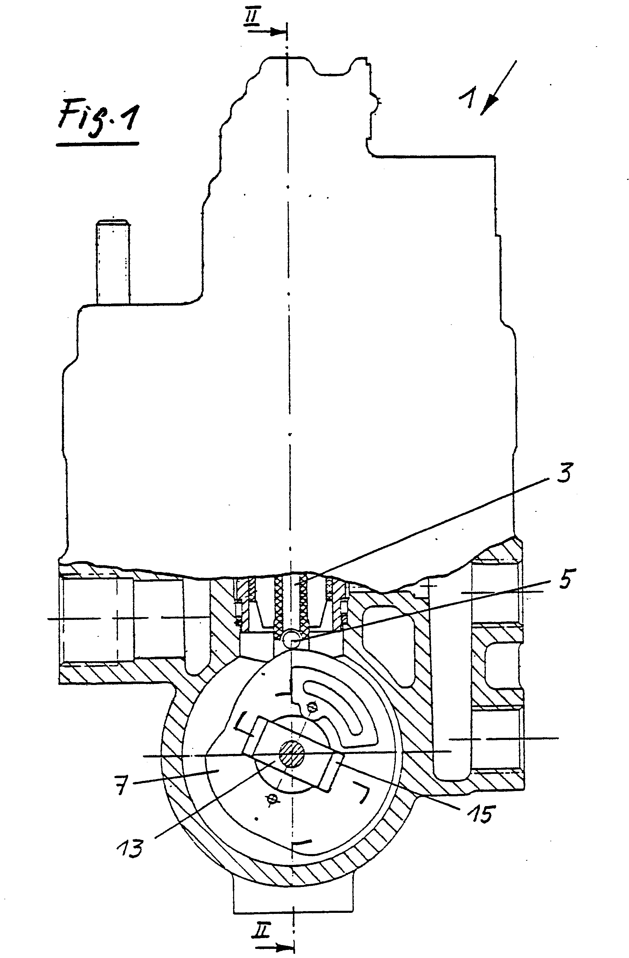

In Fig. 1 der Zeichnung ist in Teil-Schnittansicht ein lastabhängig mechanisch wirkender Bremskraftregler 1 mit einem Stößel 3 dargestellt, welcher z. B. mittels einer Rolle 5 auf einer Kurvenscheibe 7 läuft. Die Kurvenscheibe 7 steht in nachfolgend beschriebener erfindungsgemäßer Weise mit einer Steuerwelle 9 in Verbindung, welche eine Öffnung 11 zur Aufnahme eines lastabhängig schwenkbaren Hebels (nicht dargestellt) aufweist. Der Hebel vermag in bekannter Weise lastabhängig die Steuerwelle 9 zu verdrehen, wodurch sich entsprechend die Position der Rolle 5 am Außenumfang der Kurvenscheibe 7 ändert.

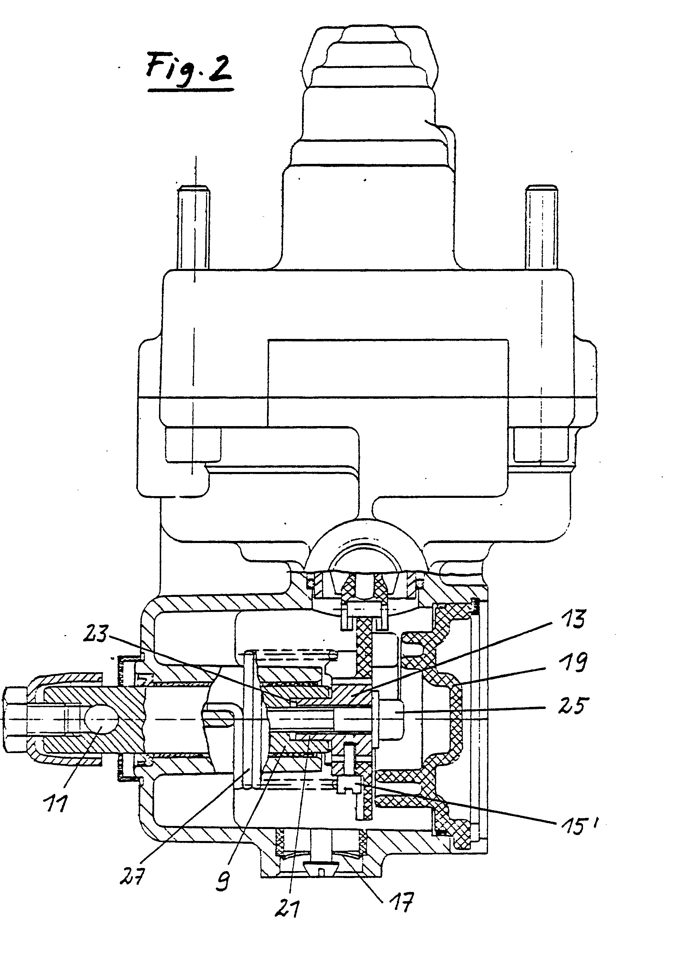

Zum Ausgleich von Fertigungstoleranzen bzw. zum genauen Einstellen ist ein Einstellmechanismus vorgesehen, welcher sowohl eine radiale Verstellung der Kurvenscheibe als auch eine in Umfangsrichtung zu vollziehende Verstellung der Kurvenscheibe ermöglicht. Die Kurvenscheibe 7, welche im dargestellten Ausführungsbeispiel aus Kunststoff besteht, ist auf einem Führungsstück 13 angeordnet. Die Kurvenscheibe 7 weist zu diesem Zweck eine Führungsöffnung 15 von rechteckigen Ausmaßen auf, in welcher das Führungsstück 13 mit entsprechenden Abmessungen eingesetzt ist, d. h. die Kurvenscheibe kann entlang der in Fig. 1 dargestellten Schnittlinie und innerhalb des verfügbaren Spielsentlang des Führungsstücks in beiden Richtungen verschoben werden. Auf diese Weise ist die Kurvenscheibe radial verstellbar, d. h. ihre Höhenlage kann z. B. in Leerlaststellung exakt bestimmt werden. Zum Fixieren und zum Verstellen der Kurvenscheibe 7 auf dem Führungsstück 13 ist im dargestellten Ausführungsbeispiel eine Schraube 15' vorgesehen, welche sich durch einen Nabenteil der Kurvenscheibe 7 erstreckt und in ein Gegengewinde des Führungsstücks 13 eingeschraubt ist. Durch Anziehen der Schraube 15' schraubt sich diese (Fig. 2) in das Führungsstück 13 ein, d. h., daß sich die Kurvenscheibe 7 relativ zum Führungsstück radial, in Fig. 2 nach oben gerichtet, bewegt. Im Bereich der Schraube 15' sind zwischen dem Führungsstück und der Kurvenscheibe (nicht dargestellte) Federelemente vorgesehen, welche die Neigung besitzen, die Kurvenscheibe im Bereich der Schraube 15' in von dem Führungsstück abgewandter Richtung zu verspannen. Auf diese Weise ist durch entsprechendes Aufdrehen der Schraube 15' ein radial in entgegengesetzter Richtung verlaufendes Einstellen der Kurvenscheibe 7 möglich. Es können natürlich auch andere Mittel·vorgesehen sein, welche zu einer Einstellung der Relativlage zwischen dem Führungsstück und der Kurvenscheibe beitragen. Wie Fig. 2 veranschaulicht, läßt sich die Schraube 15' in einfacher Weise von der Unterseite des Bremskraftreglers aus betätigen, wenn das in Fig. 2 dargestellte Entlüftungsventil 17 abgenommen ist.

Das die Kurvenscheibe tragende Führungsstück 13, welches auch aus Kunststoff bestehen kann, weist einen leicht konusförmigen Fortsatz 21 auf, welcher in eine entsprechend ausgebildete, vorzugsweise gerändelte Öffnung 23 der Steuerwelle 9 einführbar ist, derart, daß sich der Fortsatz etwas in das Material der Steuerwelle 9 eingräbt, wenn zu diesem Zweck die in Fig. 2 dargestellte Schraube 25 angezogen wird. Die Schraube 25 ist also im Gewindeeingriff mit dem Inneren der Steuerwelle 9 und kann gemäß Fig. 2 von rechts her betätigt, d. h. gedreht werden, wenn zuvor die Abdeckung 19 am Bremskraftreglergehäuse entfernt wird. Dieses Abnehmen der Abdeckung 19, welche als Abstützung für die Kurvenscheiben dienen kann, geschieht in einfacher Weise. Soll also eine Relativdrehung der Kurvenscheibe gegenüber der Steuerwelle 9 vollzogen werden, dann bedarf es nur des Lockerns der Schraube 25, um den Klemmsitz zwischen dem Fortsatz 21 und der Steuerwelle lösen zu können. Bei der in Fig. 2 dargestellten Ausführungsform ist eine Feder 27 vorgesehen, welche durch Verdrehen der Kurvenscheibe 7 vorgespannt werden kann ; zum Zwecke der Einstellung wird die Kurvenscheibe hierbei in die Leerlaststellung gebracht, was dem tiefsten Punkt der Kurve der Kurvenscheibe entspricht.

Diese Position wird nachfolgend durch Anziehen der Schraube 25 fixiert, so daß nunmehr die Kurvenscheibe 7 mit Hilfe der Schraube 15' soweit verschoben werden kann, daß der sogenannte Leerbremsdruck erreicht ist. In jedem Fall ist es mit Hilfe des vorstehend beschriebenen Einstellmechanismus in einfacher Weise möglich, die Position der Kurvenscheibe unter Berücksichtigung der Position des in die Öffnung 11 eingeführten, lastabhängig wirkenden Hebels festzulegen.

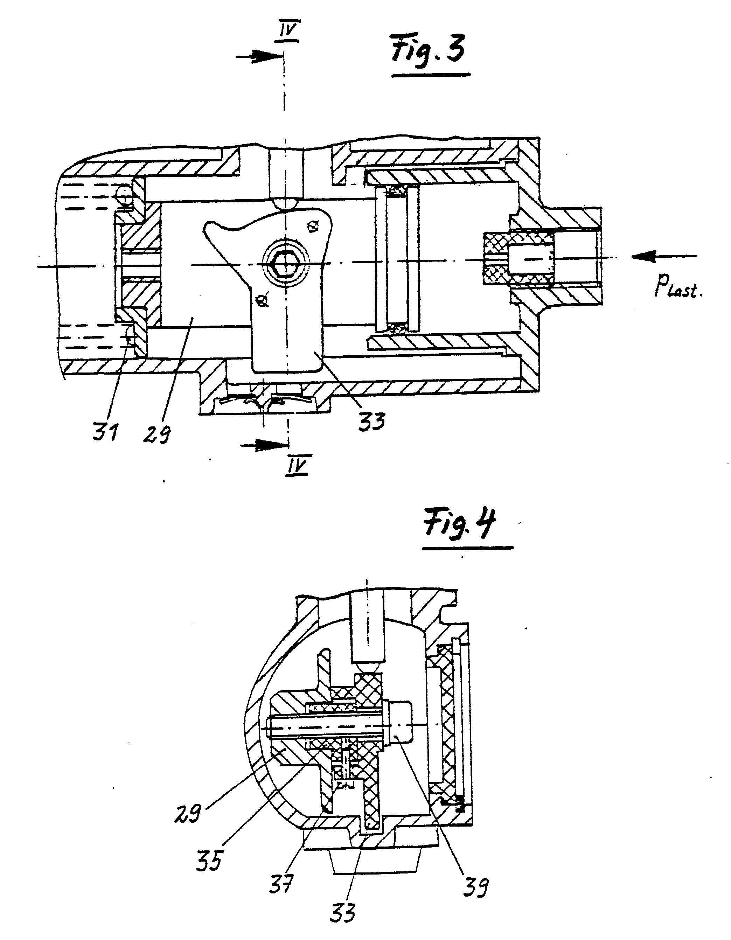

Der vorstehend beschriebene Einstellmechanismus ist nicht nur bei mechanisch wirkenden Bremskraftreglern der vorstehend erläuterten Art verwendbar, er kann auch bei einem pneumatisch lastabhängig wirkenden Bremskraftregler verwendet werden, wie die Fig. 3 und 4 veranschaulichen. Bei der in Fig. 3 und 4 dargestellten Ausführungsform ist der Einstellmechanismus an einem Bremskraftregler veranschaulicht, welcher lastabhängig pneumatisch beaufschlagt ist, derart, daß ein Schieber 29 einerseits von der Kraft einer Feder 31 und andererseits von einem lastabhängigen Druck p beaufschlagt ist. Die lastabhängige Größe geht bei derartigen Vorrichtungen nicht in einer Drehbewegung, sondern in einer Längsbewegung des Schiebers 29 ein, welcher einen der Kurvenscheibe 7 vergleichbaren Kurvenkörper 33 trägt. Der Kurvenkörper 33 ist in einer der Kurvenscheibe 7 vergleichbaren Weise mittels eines Führungsstücks 35 in einer Öffnung des Schiebers 29 fixierbar, wobei Schrauben 37 und 39 vorgesehen sind, um den Kurvenkörper 33 einzustellen. Auch bei dieser Anordnung ist es in sehr einfacher Weise möglich, sowohl die Schraube 37 als auch die Schraube 39 zu betätigen, da die Zugängigkeit zu diesen Schrauben ohne weiteres ermöglicht ist.

Bezugzeichen

1 Bremskraftregler
3 Stößel
5 Rolle
7 Kurvenscheibe
9 Steuerwelle
11 Öffnung
13 Führungsstück
15 Führungsöffnung
15' Schraube
17 Entlüftungsventil
19 Abdeckung
21 Fortsatz
23 Öffnung
25 Schraube
27 Feder
29 Schieber
31 Feder
33 Kurvenkörper
35 Führungsstück
37 Schraube
39 Schraube

**Patentansprüche**

1. Einstellmechanismus für lastabhängig angesteuerte Bremskraftregler (1), insbesondere für Motor- und Anhängerfahrzeuge, mit einer die Beladung des Fahrzeuges als Regelgröße auf einen Stößel (13) des Bremskraftreglers übertragenden Verbindungseinrichtung, welche mittels eines Steuerkurventeils positionsveränderlich auf den Stößel (3) einwirkt, dadurch gekennzeichnet, daß der Steuerkurventeil (7 ; 33) sowohl in Radialrichtung als auch im Drehsinn einstellbar auf einem Führungsstück (13 ; 35) gehaltert ist.

2. Einstellmechanismus nach Anspruch 1, bei welchem der Steuerkurventeil aus einer Kurvenscheibe (7) besteht, welche mit einer lastabhängig drehbaren Steuerwelle (9) verbindbar ist, dadurch gekennzeichnet, daß die Kurvenscheibe (7) auf einem mit dem Ende der Steuerwelle (9) des Bremskraftreglers verklemmbaren Führungsstück (13) sitzt und mittels einer einstellbaren Verschraubung relativ zum Führungsstück (13) in Richtung des Endes des Stößels (3) und von diesem abgewandt verschiebbar ist.

3. Einstellmechanismus nach Anspruch 2, dadurch gekennzeichnet, daß die Kurvenscheibe (7) und das die Kurvenscheibe tragende Führungsstück axial von einer Schraube (25) durchsetzt sind, welche in eine Gewindebohrung des Steuerwellenendes eingreift, derart, daß das Führungsstück durch Anziehen der Schraube gegenüber dem Steuerwellenende festklemmbar ist.

4. Einstellmechanismus nach Anspruch 3, dadurch gekennzeichnet, daß das Führungsstück einen konisch geformten Fortsatz (21) trägt, welcher sich in eine Öffnung (23) des Steuerwellenendes erstreckt, und daß die Gewindebohrung an der Basis der Öffnung beginnt.

5. Einstellmechanismus nach Anspruch 1, bei welchem der Steuerkurventeil aus einem Kurvenkörper (33) besteht, welcher auf einem lastabhängig pneumatisch bewegbaren Schieber angeordnet ist, dadurch gekennzeichnet, daß der Kurvenkörper (33) auf einem Führungsstück (35) angeordnet und relativ zu diesem in Radialrichtung verschiebbar ist, und daß das Führungsstück (35) mittels einer Verschraubung gegenüber dem Schieber festklemmbar oder von diesem lösbar ist.

## Claims

1. Adjusting mechanism for brake force regulators (1) driven in a load-dependent manner, more particularly for motor vehicles and trailers, having a connecting device which transfers the load of the vehicle as a regulated variable to a plunger (3) of the brake force regulator and which acts upon the plunger (3) by means of a cam portion varying the position, characterised in that the cam portion (7 ; 33) is supported on a guide piece (13 ; 35) so that it may be adjusted both in a radial direction and in the turning direction.

2. Adjusting mechanism according to claim 1, in which the cam portion consists of a com disk (7) which may be connected with a control shaft (9) which may be turned in a load-dependent manner, characterised in that the cam disk (7) sits on a guide piece (13) which may be jammed with the end of the control shaft (9) of the brake force regulator and may be displaced by means of an adjustable screwing arrangement relative to the guide piece (13) in the direction of the end of the plunger (3) and remote from the latter.

3. Adjusting mechanism according to claim 2, characterised in that the cam disk (7) and the guide piece bearing the cam disk are penetrated axially by a screw (25) which engages into a threaded bore hole of the control shaft end in such a way that the guide piece may be clamped by tightening the screw in respect of the control shaft end.

4. Adjusting mechanism according to claim 3, characterised in that the guide piece bears a conically shaped prolongation (21) which extends into an opening (23) of the control shaft end and that the threaded bore hole begins on the base of the opening.

5. Adjusting mechanism according to claim 1, in which the cam portion consists of a cam body (33) which is arranged on a slide which may be moved pneumatically in a load-dependent manner, characterised in that the cam body (33) is arranged on a guide piece (35) and may be displaced relative to said piece in a radial direction and that the guide piece (35) is capable of being clamped by means of a screwing arrangement in respect of the slide or of being detached from it.

## Revendications

1. Mécanisme de réglage pour des régulateurs de la force de freinage (1) commandés en fonction de la charge, en particulier pour des véhicules automobiles et remorques avec un dispositif de liaison qui transmet la charge du véhicule, en tant que grandeur de réglage, sur un poussoir (3) et qui agit, à l'aide d'un élément de commande curviligne sur le poussoir (3), avec modification de la position, caractérisé par le fait que l'élément de commande curviligne (7 ; 33) est monté sur une pièce de guidage (13 ; 35) de façon à être réglable tant dans le sens radial que du point de son sens de rotation.

2. Mécanisme de réglage selon la revendication 1, dans lequel l'élément de commande curviligne est constitué par une came (7) qui est susceptible d'être reliée avec un arbre de commande (9) susceptible de tourner en fonction de la charge, caractérisé par le fait que la came (7) est montée sur une pièce de guidage (13) susceptible d'être bloquée avec l'extrémité de l'arbre de commande (9) du régulateur de la force de freinage et d'être déplacée, à l'aide d'un vissage réglable, par rapport à la pièce de guidage (13) en direction de l'extrémité du poussoir (3) et dans le sens de son éloignement par rapport à ce dernier.

3. Mécanisme de réglage selon la revendication 2, caractérisé par le fait que la came (7) et la pièce de guidage qui porte la came sont traversées axialement par une vis (25) qui pénètre dans un perçage taraudé de l'extrémité de l'arbre de commande, la réalisation étant telle que la pièce de guidage est, par le serrage de la vis, blocable par rapport à l'extrémité de l'arbre de commande.

4. Mécanisme de réglage selon la revendication 3, caractérisé par le fait que la pièce de guidage porte un appendice (21) de forme conique, qui s'étend dans une ouverture (23) de l'extrémité de l'arbre de commande, et que le perçage fileté commence à la base de l'ouverture.

5. Mécanisme de réglage selon la revendication 1, dans lequel l'élément de commande curviligne est constitué par un corps curviligne (33) disposé sur un coulisseau déplaçable pneumatiquement en fonction de la charge, caractérisé par le fait que le corps curviligne (33) est monté sur une pièce de guidage (35) et est déplaçable par rapport à ce dernier dans le sens radial, et que la pièce de guidage (35) est susceptible d'être bloquée par rapport au coulisseau ou d'en être détachée à l'aide d'un vissage.

_Fig.1_

1

3

5

7

13

15

0 110 203

Fig. 2

2

IV →

*Fig. 3*

P_Last.

31   29   33

*Fig. 4*

29

35

37   33   39